(19) Europäisches Patentamt
European Patent Office
Office européen des brevets

(11) **EP 3 701 475 B1**

(12) **EUROPEAN PATENT SPECIFICATION**

(45) Date of publication and mention
of the grant of the patent:
**30.07.2025 Bulletin 2025/31**

(21) Application number: **17823156.9**

(22) Date of filing: **22.12.2017**

(51) International Patent Classification (IPC):
**G06Q 30/02** (2023.01)    **G06F 21/62** (2013.01)

(52) Cooperative Patent Classification (CPC):
**G06Q 30/02; G06F 21/6245; G06N 20/20**

(86) International application number:
**PCT/EP2017/084494**

(87) International publication number:
**WO 2019/120579 (27.06.2019 Gazette 2019/26)**

(54) **CLIENT, SERVER, AND CLIENT-SERVER SYSTEM ADAPTED FOR UPDATING A CLIENT-ITEM MATRIX**

CLIENT, SERVER UND ADAPTIERTES CLIENT-SERVER-SYSTEM ZUR AKTUALISIERUNG EINER CLIENT-ITEM-MATRIX

CLIENT, SERVEUR ET SYSTÈME CLIENT-SERVEUR CONÇUS POUR METTRE À JOUR UNE MATRICE CLIENT-ARTICLE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
**02.09.2020 Bulletin 2020/36**

(73) Proprietor: HUAWEI TECHNOLOGIES CO., LTD.
Shenzhen, Guangdong 518129 (CN)

(72) Inventor: FLANAGAN, Adrian
16440 Kista (SE)

(74) Representative: Gill Jennings & Every LLP
The Broadgate Tower
20 Primrose Street
London EC2A 2ES (GB)

(56) References cited:
US-A1- 2009 307 296    US-A1- 2014 344 343

- **EFTHALIA KARYDI ET AL: "Parallel and Distributed Collaborative Filtering : A Survey", ACM COMPUTING SURVEYS., vol. 49, no. 2, 13 August 2016 (2016-08-13), US, pages 1 - 41, XP055467586, ISSN: 0360-0300, DOI: 10.1145/2951952**
- **BOUTET ANTOINE ET AL: "Privacy-preserving distributed collaborative filtering", COMPUTING, SPRINGER, VIENNA, AT, vol. 98, no. 8, 26 March 2015 (2015-03-26), pages 827 - 846, XP036008395, ISSN: 0010-485X, [retrieved on 20150326], DOI: 10.1007/S00607-015-0451-Z**
- **REZA SHOKRI ET AL: "Preserving privacy in collaborative filtering through distributed aggregation of offline profiles", PROCEEDINGS OF THE THIRD ACM CONFERENCE ON RECOMMENDER SYSTEMS : OCTOBER 23 - 25, 2009, NEW YORK, NY, USA, 25 October 2009 (2009-10-25), NEW YORK, NY, US, pages 157, XP055468000, ISBN: 978-1-60558-435-5, DOI: 10.1145/1639714.1639741**

**Description**

TECHNICAL FIELD

The disclosure relates to an improved client, server, and client-server system allowing individual elements of a client-item matrix to be updated.

BACKGROUND

A client-server system is a structure in which the tasks of the system is divided between the provider of a service, i.e. a server, and service requesters, i.e. clients. The server may run one or more programs which share their resources with the clients. The client, on the other hand, does not share any of its resources, but requests a server's content or service function. The clients, i.e. user devices such as mobile phones or tablets, are an important part of a machine learning process used in such a client-server system, since each client is a source of data, the data being used for building the models used in the machine learning process and for generating the results from the models.

The results may, e.g., be used to generate a recommendation of one or several specific items, taken from a larger set of items, which may be of interest to the user of the client. An item is, e.g., a video available for viewing, an application available for downloading, or a physical object such as a piece of clothing available for purchase. The clients and the items may be collected in a so-called client-item matrix.

The machine learning process comprises creating complex models and algorithms which may be used for calculating estimates of any unspecified elements, i.e. missing values, of the client-item matrix, e.g. by exploiting patterns found in historical and transactional data. The estimates of the missing values indicate the probability of the user viewing the above-mentioned video, downloading the application, or purchasing the piece of clothing.

It is difficult to achieve an efficient machine learning process, since it is hard to find patterns and oftentimes there is not sufficient training data available; as a result, machine learning processes often fail to deliver. Hence, it is important that as much data as possible is available to the machine learning process. For a client-server system, this translates to the server having access to as many clients, and their data, as possible. Each client is a user device such as a mobile phone or a tablet, and it is not only a source of data used for building models used in the machine learning process, but it is also the medium for delivering the results of the models, i.e. estimates replacing the above-mentioned unspecified elements.

Clients, such as mobile phones and tablets, comprise different kinds of personal user data, e.g., client location, which may be considered very sensitive personal data, and downloaded applications, which may be considered not particularly sensitive personal data. Regardless of the sensitivity levels, the data is still considered to be personal user data.

Regulations such as, e.g., the GDPR (General Data Protection Regulation) which is to be enforced in the EU countries in 2018, as well as general scrutiny of how companies collect, store, and use user data are issues which make generating estimates more difficult, and maybe even impossible when explicit user opt-in consent is required to collect the user's data and to store and process it. With surveys disclosing opt-in rates as low as 20%, trying to generate such estimates may no longer be useful.

Furthermore, collecting gigabytes of user data daily, for a large number of clients, as well as storing and using the data securely, requires expensive infrastructure and administration solutions.

US 2009/307296 A1 relates to anonymous collaborative filtering.

SUMMARY

It is an object to provide an improved client, server, and client-server system.

The foregoing and other objects are achieved by the features of the independent claims. Further implementation forms are apparent from the dependent claims, the description, and the figures.

According to a first aspect, there is provided a client adapted for updating individual elements of a client-item matrix by means of Collaborative Filtering, $R = X^T Y$, $r_{ij} = x_i^T y_j$, T being a matrix/vector transpose, the matrix comprising a plurality of individual elements, each individual element relating to a specific client and a specific item, the client utilizing an individual part of a first model component and at least one element of local client data, the first model component being a

$$x_i = \begin{pmatrix} x_{i1} \\ x_{i2} \\ \cdot \\ \cdot \\ \cdot \\ x_{ik} \end{pmatrix}$$

factor matrix $A = X(i, k)$ comprising a plurality of client factor vectors, , k being the number of factors, the individual part of the first model component being the client factor vector for the client, the client being connected to a server utilizing a second model component and a global set of items, M being a maximum number of items, the second model

$$y_j = \begin{pmatrix} y_{j1} \\ y_{j2} \\ . \\ . \\ . \\ y_{jk} \end{pmatrix}$$

component being a factor matrix $B = Y(j, k)$ comprising a plurality of item factor vectors, , k being the number of factors, the client being configured to: assign the individual part of the first model component to the client, download a second model component from the server, calculate an updated individual part of the first model component by means of the downloaded second model component and the element of local client data, calculate an individual value for each item by means of a function f(i,j), the function using the downloaded second model component, the updated individual part of the first model component, and the element of local client data, upload an evaluation of the value to the server such that an updated second model component is calculated by the server by means of the second model component and an aggregate of evaluations of the value uploaded from a plurality of clients including the client and other determined clients, N being a maximum number of clients, download the updated second model component from the server, calculate a new updated individual part of the first model component by means of the updated second model component and the element of local client data, update at least one individual element of the matrix by means of the new updated individual part of the first model component and the updated second model component.

A client, comprising these features, allows for a machine learning process which is efficient, since it has access to the client data of all clients connected to a server, as well as secure, since the client data related to an individual client remains on the very same. Since the server, connected to the client, does not have to collect or store large amounts of client data, the process is time- and cost-effective as well.

In a possible implementation form of the first aspect, at least one individual element of the client-item matrix is unspecified, and the updating of individual elements comprises replacing an unspecified individual element with an estimate, $\hat{r}_{ij} = x_i{}^T y_j$, allowing an initially sparse client-item matrix to become dense with elements.

In a further possible implementation form of the first aspect, the client-item matrix is used for generating personalized application recommendations for a user of the client, the recommendations, relating to at least one of the items, being generated on the client by means of the individual elements, such that the user of a client can be provided with item recommendations which are relevant to the user.

In a further possible implementation form of the first aspect, the aggregate of evaluations is calculated by means of equation $\frac{\partial J}{\partial y_j} =$ -2$\Sigma_i$f(i,j) + 2$\lambda y_j$, wherein $\lambda$ is a regularization parameter and J is a cost function, allowing an aggregate, which correctly reflects the content of the client data of the clients, to be generated, without transferring any client data from the client.

In a further possible implementation form of the first aspect, the second model component is updated by means of equation $y_j = y_j - \gamma \frac{\partial J}{\partial y_j}$, wherein $\gamma$ is a gain function, allowing the second model component to be updated on the server, in response to client data, without having direct access to the client data.

In a further possible implementation form of the first aspect, the function f(i,j) is calculated by means of equation $f(i,j) = [p_{ij}(r_{ij} - x_i^T y_j)]x_i$, wherein p is a binary preference variable which indicates the preference of a user of a client for an item, by means of $p_{ij} \begin{cases} 1 & r_{ij} > 0 \\ 0 & r_{ij} = 0 \end{cases}$, a value $p_{ij}$=1 indicating an interest in item, and a value $p_{ij}$=0 indicating one of a disinterest in item or unawareness of the item, allowing the explicit preferences, such as reviews, of the individual user to be taken into account.

In a further possible implementation form of the first aspect, the first model component is updated by means of equation $x_i = (Yp(i)Y^T + \lambda I)^{-1}YR^i p(i)$, wherein p(i) is a binary preference variable vector for the client, $R^i$ is a vector of known inputs for client, I is an identity matrix, and $\lambda$ is a regularization parameter, allowing the first model component to be updated solely on the client.

In a further possible implementation form of the first aspect, the element of local client data comprises implicit user feedback relating to one of the items, allowing estimates to be made on the basis of user actions.

In a further possible implementation form of the first aspect, the function f(i,j) is calculated by means of equation

$$f(i,j) = [c_{ij}(p_{ij} - x_i^T y_j)]x_i$$ , wherein c is a confidence parameter and p is a binary preference variable which indicates the preference of a user of a client for an item, by means of $$p_{ij} \begin{cases} 1 & r_{ij} > 0 \\ 0 & r_{ij} = 0 \end{cases}$$ , a value $p_{ij}$=1 indicating an interest in item, and a value $p_{ij}$=0 indicating one of a disinterest in item or unawareness of the item, allowing the implicit preferences of the individual user, such as downloads, to be taken into account.

In a further possible implementation form of the first aspect, the first model component is updated by means of equation $x_i = (YC^iY^T + \lambda I)^{-1}YC^ip(i)$, wherein p(i) is a binary preference variable vector for the client, C' is a diagonal matrix, and $\lambda$ is a regularization parameter, allowing the first model component to be updated solely on the client.

According to a second aspect, there is provided a server adapted for updating individual elements of a client-item matrix R by means of Collaborative Filtering, $R = X^T Y$, $r_{ij} = x_i^T y_j$, T being a matrix/vector transpose, the matrix comprising a plurality of individual elements, each individual element relating to a specific client and a specific item, the server utilizing a second model component and a global set of items, M being a maximum number of items, the second model component

$$y_j = \begin{pmatrix} y_{j1} \\ y_{j2} \\ \cdot \\ \cdot \\ \cdot \\ y_{jk} \end{pmatrix}$$

being a factor matrix B = Y(j, k) comprising a plurality of item factor vectors, , k being the number of factors, the server being connected to a plurality of clients utilizing a first model component, N being a maximum number of clients, each individual client comprising an individual part of the first model component, and each individual client further utilizing at least one element of local client data, the first model component being a factor matrix A = X(i, k) comprising a plurality of

$$x_i = \begin{pmatrix} x_{i1} \\ x_{i2} \\ \cdot \\ \cdot \\ \cdot \\ x_{ik} \end{pmatrix}$$

client factor vectors, , k being the number of factors, the individual part of the first model component being the client factor vector for the client, the server being configured to: determine several of the clients, assign a second model component to the server, receive an aggregate of evaluations of individual values from the several determined clients, wherein in each determined client an updated individual part of the first model component is calculated by means of the assigned second model component which is downloaded by each determined client and the element of local client data, and the individual value for each item is calculated by means of a function f(i,j), the function using the assigned second model component, the updated individual part of the first model component, and the element of local client data, and the evaluation of the value is uploaded by each determined client to the server, calculate an updated second model component by means of the assigned second model component and the aggregate of evaluations uploaded from the several determined clients, transmit the updated second model component to each determined client such that, in each determined client, a new updated individual part of the first model component is calculated by means of the updated second model component and the element of local client data, and at least one individual element of the matrix is updated, on the determined client, by means of the new updated individual part of the first model component and the updated second model component.

A server, comprising these features, allows for a machine learning process which is efficient, since it has access to the client data of all clients connected to the server, as well as secure, since any client data related to an individual client remains on the very same. Since the server does not have to collect or store large amounts of client data, the process is time- and cost-effective as well.

In a possible implementation form of the second aspect, at least one individual element of the client-item matrix is unspecified, and the updating of individual elements, on the determined client, comprises replacing an unspecified individual element with an estimate, $\hat{r}_{ij} = x_i^T y_j$, allowing an initially sparse client-item matrix to become dense with elements.

In a further possible implementation form of the second aspect, the client-item matrix is used for generating personalized application recommendations for a user of the client, the recommendations, relating to at least one of the items, being generated on the client by means of the individual elements, such that the user of a client can be provided with item recommendations which are relevant to the user.

In a further possible implementation form of the second aspect, the aggregate of evaluations is calculated by means of equation $\frac{\partial J}{\partial y_j} = -2\sum_i f(i,j) + 2\lambda y_j$ , wherein $\lambda$ is a regularization parameter and J is a cost function, allowing an aggregate, which correctly reflects the content of the client data of the clients, to be generated, without transferring any client data from the client.

In a further possible implementation form of the second aspect, the second model component is updated by means of equation $y_j = y_j - \gamma\frac{\partial J}{\partial y_j}$, wherein $\gamma$ is a gain function, allowing the second model component to be updated on the server, in response to client data, without having direct access to the client data.

In a further possible implementation form of the second aspect, the function f(i,j) is calculated by means of equation $f(i,j) = [p_{ij}(r_{ij} - x_i^T y_j)]x_i$, wherein p is a binary preference variable which indicates the preference of a user of a client for an item, by means of $p_{ij}\begin{cases}1 & r_{ij} > 0 \\ 0 & r_{ij} = 0\end{cases}$, a value $p_{ij}$=1 indicating an interest in item, and a value $p_{ij}$=0 indicating one of a disinterest in item or unawareness of the item, allowing the explicit preferences, such as reviews, of the individual user to be taken into account.

In a further possible implementation form of the second aspect, the first model component is updated by means of equation $x_i = (Yp(i)Y^T + \lambda I)^{-1}YR^i p(i)$, wherein p(i) is a binary preference variable vector for the client, $R^i$ is a vector of known inputs for client, I is an identity matrix, and $\lambda$ is a regularization parameter, allowing the first model component to be updated solely on the client.

In a further possible implementation form of the second aspect, the element of local client data comprises implicit user feedback relating to one of the items, allowing estimates to be made on the basis of user actions.

In a further possible implementation form of the second aspect, the function f(i,j) is calculated by means of equation $f(i,j) = [c_{ij}(p_{ij} - x_i^T y_j)]x_i$, wherein c is a confidence parameter and p is a binary preference variable which indicates the preference of a user of a client for an item, by means of $p_{ij}\begin{cases}1 & r_{ij} > 0 \\ 0 & r_{ij} = 0\end{cases}$, a value $p_{ij}$=1 indicating an interest in item, and a value $p_{ij}$=0 indicating one of a disinterest in item or unawareness of the item, allowing the implicit preferences of the individual user, such as downloads, to be taken into account.

In a further possible implementation form of the second aspect, the first model component is updated by means of equation $x_i = (YC^i Y^T + \lambda I)^{-1}YC^i p(i)$, wherein p(i) is a binary preference variable vector for the client, C' is a diagonal matrix, I is an identity matrix, and $\lambda$ is a regularization parameter, allowing the first model component to be updated solely on the client.

According to a third aspect, there is provided a client-server system adapted for updating individual elements of a client-item matrix R by means of Collaborative Filtering, the system comprising multiple clients, described above, and a server, described above. A client-server system, comprising these features, allows for a machine learning process which is efficient, since it has access to the client data of all of the clients, as well as secure, since any client data related to an individual client remains on the very same. Since the server does not have to collect or store large amounts of client data, the process is time- and cost-effective as well.

This and other aspects will be apparent from the embodiments described below.

BRIEF DESCRIPTION OF THE DRAWINGS

In the following detailed portion of the present disclosure, the aspects, embodiments and implementations will be explained in more detail with reference to the example embodiments shown in the drawings, in which:

Fig. 1 is a schematic drawing of a client-server system according to one embodiment of the present disclosure.

Fig. 2 is a schematic diagram showing steps executed within the system shown in Fig. 1.

DETAILED DESCRIPTION

As mentioned in the background section, a client-server system is a structure in which the tasks of the system is divided between the provider of a service, i.e. a server, and service requesters, i.e. clients such as mobile phones or tablets. The service to be provided may be a video service, all of the user data associated with the video service being stored on the server.

Prior art model building comprises sending personal user data from a client to a central server where the data is processed, models are built, and results are generated and sent back to the client. The results may, e.g., be an estimate to be used, later on, for generating recommendations of one or several specific items predicted, by one or several models, to be of interest to the user of the client. An item is, e.g., a video available for viewing, an application available for downloading, or a physical object such as a piece of clothing available for purchase.

The number of clients as well as available items is usually very large, and are preferably collected in a client-item matrix $R = (r_{ij}) \in R^{N \times M}$, N being the maximum number of clients i connected to the server, and M being the maximum number of items j available on the server.

Given the number of clients N can be several million, and the number of items M several thousand, the client-item matrix R may be sparse with many elements $r_{ij}$ unspecified. One object of the present disclosure is to replace such unspecified elements with their estimates $\widehat{r_{ij}}$.

Contrary to prior art, and due to technological advancement such as a general increase in computational ability of clients, the present disclosure generates such estimates while still maintaining all personal user data on the client, i.e. personal user data is neither used nor stored on a central server. Hence, the amount of data to be transferred to, and stored on, the server is reduced, and issues related to data collection and user privacy are avoided.

The above is achieved by means of, i.a., Collaborative Filtering. In short, in Collaborative Filtering a model is built from a user's past behavior, such as items previously purchased or selected and/or numerical ratings given to those items by the user, as well as similar decisions made by other users. This model is then used to predict which other items the user may have an interest in. Collaborative Filtering is one of the most used models to generate recommendations for a user, either independently or in combination with other types of models such as, e.g., Predictive Modeling. In prior art, these models both require gathering all data to be used in building the model to be collected in a centralized server.

As previously mentioned, the number of clients as well as the number of items is usually very large, wherefore a combination of models may be used to provide only relevant recommendations to the user of a specific client i. As an example, Collaborative Filtering may be used to generate a first set of item recommendations, a so-called candidate set comprising some, if not all, of the above-mentioned elements $r_{ij}$ and estimates $\widehat{r_{ij}}$, whereafter Predictive Modeling may be used to create the final, usable recommendations by scoring the initially recommended items and sorting them by weight.

The estimates may be based on implicit and/or explicit feedback from not only the specific client but a plurality of clients, in one embodiment all possible clients. Implicit feedback comprises actions taken by the user, e.g. downloading an application. Explicit feedback comprises user reviews of items. Collaborative Filtering only uses these two kinds of data, while the above-mentioned Predictive Modeling may use additional kinds of explicit feedback such as demographics, behavioral data, other user activity related data such as where and when an item was interacted with and what kind of device was used, and also personal user data such as name and login data.

The basis of all Collaborative Filtering recommender systems is the above-mentioned client-item matrix $R = (r_{ij}) \in R^{N \times M}$. For the sake of simplicity, the description below will at times equate a client i with its user, and an item j with an application available for downloading.

In Collaborative Filtering, the value $r_{ij}$ is derived from explicit feedback such as user reviews, e.g. $r_{ij} \in (1, ....,5)$.

In the case of implicit feedback such as, e.g., the user downloading an application, $r_{ij}=1$ when user/client i downloaded application/item j, where $1 \leq i \leq N$ and $1 \leq j \leq M$, while $r_{ij}$ is unspecified otherwise.

Collaborative Filtering is used to replace the unspecified $r_{ij}$ with their estimates $\widehat{r_{ij}}$, e.g. by means of Matrix Factorization.

$$x_i = \begin{pmatrix} x_{i1} \\ x_{i2} \\ \cdot \\ \cdot \\ \cdot \\ x_{ik} \end{pmatrix}$$

Matrix Factorization involves creating a client factor vector $x_i \in R^{kx1}$, , for each client i, and an item

$$y_j = \begin{pmatrix} y_{j1} \\ y_{j2} \\ . \\ . \\ . \\ y_{jk} \end{pmatrix}$$

factor vector $y_j \in R^{kx1}$, , for each item j. k is the number of factors, which is typically much lower than both M and N. The estimate for an unspecified $r_{ij}$ is then given by $\widehat{r_{ij}} = x_i^T y_j$ .

The first model component A is a factor matrix $A = X(i, k)$ comprising a plurality of client factor vectors ($x_i$), and the second model component B is a factor matrix $B = Y(j, k)$ comprising a plurality of item factor vectors ($y_j$).

The client factor vectors are collected into a matrix $X \in R^{kxM}$ where $X = (x_1, x_2, ..., x_i, ..., x_M)$, and the item factor vectors are collected into a matrix $Y \in R^{kxN}$ where $Y = (y_1, y_2, ..., y_j, ..., y_N)$. The client-item matrix R is, in other words, also defined as $R = X^T Y$.

For the case of explicit feedback, a set of binary variables $p_{ij}$ are introduced to indicate whether the user/client i has rated an application/item j or not, where $p_{ij} \begin{cases} 1 & r_{ij} > 0 \\ 0 & r_{ij} = 0 \end{cases}$. A value $p_{ij} > 0$ means that the application/item j has been rated, while a value $p_{ij} = 0$ means that the user has not rated the application/item j or is simply not aware an application/item j exists.

For the case of implicit feedback, a set of binary variables $p_{ij}$ are introduced to indicate the preference of user/client i for application/item j, where $p_{ij} \begin{cases} 1 & r_{ij} > 0 \\ 0 & r_{ij} = 0 \end{cases}$. A value $p_{ij} = 0$ can have many interpretations including the user/client i not being interested in an application/item j or not being aware an application/item j exists. To account for this, a confidence parameter $c_{ij}$ is introduced, defined as $c_{ij} = 1 + \propto r_{ij}$ where $\alpha > 0$. The implicit feedback problem is, in other words, different from the standard explicit feedback problem in that the confidence levels $c_{ij}$ need to be taken into account.

Any updates are to be made across all clients i and all items j rather than just the clients i for which there are downloads j.

In prior art Collaborative Filtering models, $x_i$ is updated by means of the equation $x_i = (YC^iy^T + \lambda I)^{-1} YC^i p(i)$, where Y, $Y \in R^{kxN}$, is the above-mentioned matrix of item factor vectors, C' is a diagonal matrix with $C_{jj}^i = c_{ij}$, I is an identity matrix, and $p(i) \in R^{Nx1}$ is a binary preference variable vector for the client i.

Similarly, $y_j$ is updated by means of the equation $y_j = (XC^iYX^T + \lambda I)^{-1} XC^i p(j)$ where X, $X \in R^{kxM}$, is the above-mentioned matrix of client factor vectors, $C^i$ is a diagonal matrix with $C_{ii}^j = c_{ij}$, and $p(i) \in R^{N \times 1}$ is a binary preference variable vector for the client i.

In summary, the above described prior art method uses Y for calculating X, and X for calculating Y, repeating and alternating between the two equations at least until a suitable convergence criteria is met. The convergence criteria is a predefined limit value, for example 1 %. C and p, which are based on user/client data, are used for calculating both X and Y, wherefore all user data has to be located in the same place as X and Y, i.e. on the server. This is referred to as the ALS (Alternating Least Squares) method for Collaborative Filtering, and it is frequently used in prior art.

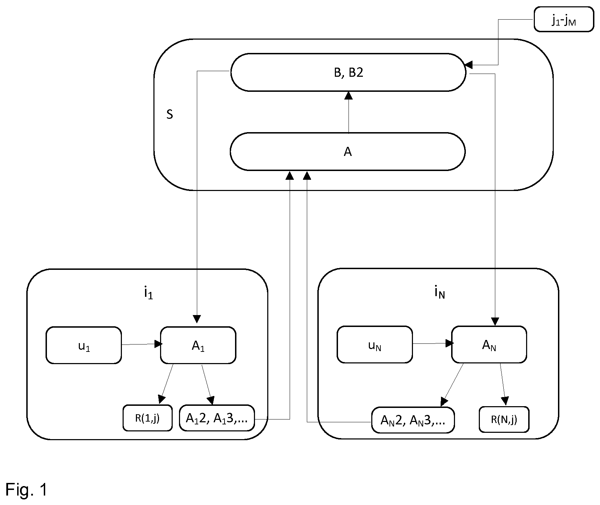

The embodiments of the present disclosure, shown schematically in Fig. 1, comprises an adaptation of the ALS method such that a different approach is taken to calculating Y, which adaptation allows the calculations to be distributed to the client, hence avoiding the need to transfer client data back to the server. All item factor vectors $y_j \in R^{kx1}$ are located on the server, updated on the server, and thereafter distributed to each client i. All client factor vectors $x_i \in R^{kx1}$ remain on the client i, are updated on the client using local client data $u_i$, and the item factor vectors from the server. The updates, gradients $\delta y_{ij}$ are calculated from item j on each client i and transmitted to the server where they are aggregated and the $y_j$ are updated.

All of the values necessary for calculating $x_i = (YC^iY^T + \lambda I)^{-1} YC^i p(i)$ are available on the client i, as long as a current set of item factor vectors $y_j \in R^{kx1}$ have been downloaded onto the client i, Y being the matrix of item factor vectors, $C^i$ a diagonal matrix with $C_{jj}^i = c_{ij}$, $\lambda$ the regularization factor, I an identity matrix, and $p(i) \in R^{Nx1}$ is a binary preference variable vector for the client i. Furthermore, all of these values are independent from the corresponding values of any other client i. Hence, what corresponds to a first step of the ALS algorithm can be calculated on each individual client i without reference to any other client.

However, when using the ALS method, the calculation of $y_j$, $y_j = (XC^jYX^T + \lambda I)^{-1} XC^jp(j)$, requires the matrix of client factor vectors X, wherefore this update must take place on the server where all client data is available. Rather than directly calculating an update of $y_j$, as in the ALS method, the present disclosure applies a gradient descent approach to calculate the updated $y_j$ on the server. More specifically, the present disclosure calculates the updated $y_j$, i.e. the updated matrix Y, by means of equation $$y_j = y_j - \gamma \frac{\partial J}{\partial y_j}$$ , $\gamma$ being a gain function and $\partial J/\partial y_j$ being calculated by means of equation $$\frac{\partial J}{\partial y_j} = -2 \sum_i [c_{ij} (p_{ij} - x_i^T y_j)] x_i + 2\lambda y_j$$ .

The above-mentioned equation $\frac{\partial J}{\partial y_j}$ originates from the cost function J, $J =$

$$\sum_i \sum_j c_{ij} (p_{ij} - x_i^T y_j)^2 + \lambda (\sum_i \|x_i\|^2 + (\sum_j \|y_j\|^2)$$ , where $\lambda$ is the regularization factor. The cost function J is minimized by alternating the calculations of the client factor vector matrix X and the item factor vector matrix Y. The first step of minimizing the cost function J is to differentiate J with regards to $x_i$ for all clients i and $y_j$ for all items j, by means of $\partial J/\partial x_i$ and $\partial J/\partial y_j$.

The initial starting value of $x_i$ is calculated directly by means of $\frac{\partial J}{\partial x_i} = 0$ , $x_i = (YC^iY^T + \lambda I)^{-1} YC^ip(i)$ as in the ALS method, which is possible since, as mentioned above, the values necessary are available on the client i. $\partial J/\partial y_j$, on the other hand, comprises a component which is a summation over all clients i, said summation being defined as f(i,j). f(i,j) is calculated on the client, based only on client data, by means of $$f(i,j) = [c_{ij}(p_{ij} - x_i^T y_j)]x_i$$ , i.e. f(i,j) is calculated on each client i, independently of all other clients.

Each client i reports back, to the server, an evaluation of the value f(i,j) calculated for each item j, whereafter all of the client evaluations are summarized, on the server, by means of $$\frac{\partial J}{\partial y_i} = -2 \sum_i f(i,j) + 2\lambda y_j$$ and thereafter

applied to $y_j = y_j -$ $\gamma \frac{\partial J}{\partial y_j}$ .

The present disclosure relates, in other words, to training a Collaborative Filtering model without having to transfer user data back to the server, and at the same time using the Collaborative Filtering model to calculate estimates for the unspecified elements of the client-item matrix R. As shown in Fig. 1, the machine learning model component B/ is located on a centralized server S, and a model component $A_i$ is located on a number of determined clients i. The model component B is distributed to each user device/client i, and the initial model component $A_i$ is updated using the model component B and client data $u_i$ located on the client i. Updates to be used in model component B, or complete updated model components B, generated on the user device/client i, are transferred back to the server S where they are aggregated across all determined clients $i_1$-$i_N$ to generate a new, updated model component B. The model component $A_i$ stored locally on the client i uses the client data $u_i$ for generating the estimates. Hence the client data $u_i$ never leaves the client i.

One aspect of the present disclosure relates to a client I adapted for updating individual elements $r_{ij}$ of a client-item matrix R by means of Collaborative Filtering, see Fig. 1. The client-item matrix R, $R = (r_{ij}) \in R^{N \times M}$, comprises a plurality of individual elements $r_{ij}$, each individual element relating to a specific client i and a specific item j. By specific is meant one single client i or item j.

The client i utilizes, as shown in Fig. 1, an individual part $A_i$ of a first model component A and at least one element of local client data $u_i$, the first model component A being a factor matrix $A = X(i, k)$ comprising a plurality of client factor

$$x_i = \begin{pmatrix} x_{i1} \\ x_{i2} \\ . \\ . \\ . \\ x_{ik} \end{pmatrix}$$

vectors $x_i$, , k being the number of factors. The individual part $A_i$ of the first model component A is the client factor vector $x_i$ for the client i.

The client i is, furthermore, connected to a server S utilizing a second model component B and a global set of

items $j_1,...,j_M$, as shown in Fig. 1, M being the maximum number of items.

The second model component B is a factor matrix $B = Y(j, k)$ comprising a plurality of item factor vectors $y_j$,

$$y_j = \begin{pmatrix} y_{j1} \\ y_{j2} \\ . \\ . \\ . \\ y_{jk} \end{pmatrix}.$$

The client i is configured to execute the following steps, shown schematically in Fig. 1:

A. assign the individual part $A_i$ of the first model component A to the client (i),

B. download the second model component B from the server,

C. calculate an updated individual part $A_i2$ of the first model component A by means of the downloaded second model component B and the element of local client data $u_i$,

D. calculate an individual value for each item $j_1,...,j_M$ by means of a function f(i,j), the function using the downloaded second model component B, the updated individual part $A_i2$ of the first model component A, and the element of local client data $u_i$,

E. upload an evaluation of the value to the server such that an updated second model component B2 is calculated by the server by means of the second model component B and an aggregate of evaluations of the value uploaded from a plurality of clients $i_1,...,i_N$ including the client and other determined clients, N being a maximum number of clients,

F. download the updated second model component B2 from the server,

G. calculate a new updated individual part $A_i3$ of the first model component A by means of the updated second model component B2 and the element of local client data $u_i$, and

H. update at least one individual element $r_{ij}$ of the matrix R by means of the new updated individual part $A_i3$ of the first model component A and the updated second model component B2.

At least one individual element $r_{ij}$ of the client-item matrix R is unspecified, and the above-mentioned updating of individual elements $r_{ij}$, mentioned in step H above, comprises replacing such unspecified individual elements $r_{ij}$ with their estimates $(\hat{r}_{ij})$, $\hat{r}_{ij} = x_i^T y_j$.

The client-item matrix R is used for generating personalized application recommendations for a user of the client i, the recommendations, relating to at least one of the items $j_1,...,j_M$, are generated on the client i by means of the individual elements $\hat{r}_{ij}$, $r_{ij}$.

The step of assigning an individual part $A_i$ of the first model component A may comprise selecting an individual part $A_i$ of a random model component A or an individual part $A_i$ of a previously known model component A.

The above-mentioned steps C-H may be repeated at least until a predefined convergence threshold has been reached for the first model component A and/or the second model component B.

The aggregate of evaluations, mentioned in step E above, may be calculated by means of equation

$$\frac{\partial J}{\partial y_i} = -2\sum_i f(i,j) + 2\lambda y_j$$, wherein $\lambda$ is a regularization parameter and J is a cost function.

The second model component B may be updated, as mentioned in step E above.

The updating is executed by means of equation $$y_j = y_j - \gamma\frac{\partial J}{\partial y_j}$$, wherein $\gamma$ is a gain function.

The element of local client data $u_i$ may comprise explicit user feedback relating to one of the items $j_1,...,j_M$, in which case the function f(i,j), mentioned in step D above, may be calculated by means of equation

$$f(i,j) = [p_{ij}(r_{ij} - x_i^T y_j)]x_i$$, wherein p is a binary preference variable which indicates the preference of the user of a client i for an item $j_1,...,j_M$, by means of $$p_{ij}\begin{cases} 1 & r_{ij} > 0 \\ 0 & r_{ij} = 0 \end{cases}$$, a value $p_{ij}=1$ indicating an interest in item $j_1,...,j_M$, and a value $p_{ij}=0$ indicating one of a disinterest in item $j_1,...,j_M$ or unawareness of the item. The first model component A may, in this case, be updated as mentioned in steps C and G above. The updating is executed by means of equation $x_i = (Yp(i)Y^T + \lambda I)^{-1} YR^i p(i)$, wherein p(i) is a binary preference variable vector for the client i, $R^i$ is a vector of known inputs for client i, I is an identity matrix, and $\lambda$ is a regularization parameter.

The element of local client data $u_i$ may also comprise implicit user feedback relating to one of the items $j_1,...,j_M$, in

which case the function f(i,j), mentioned in step D above, is calculated by means of equation

$$f(i,j) = [c_{ij}(p_{ij} - x_i^T y_j)]x_i$$

, wherein c is a confidence parameter and p is a binary preference variable which indicates the preference of a user of a client (i) for an item ($j_1,...,j_M$), by means of $p_{ij} \begin{cases} 1 & r_{ij} > 0 \\ 0 & r_{ij} = 0 \end{cases}$, a value $p_{ij}$=1 indicating an interest in item ($j_1,...,j_M$), and a value $p_{ij}$=0 indicating one of a disinterest in item $j_1,...,j_M$ or unawareness of the item. The first model component (A) may, in this case, be updated by means of equation $x_i = (YC^iY^T + \lambda I)^{-1}YC^ip(i)$, wherein p(i) is a binary preference variable vector for the client i, $C^i$ is a diagonal matrix, I is an identity matrix, and $\lambda$ is a regularization parameter.

A further aspect of the present disclosure relates to a server S adapted for updating individual elements $r_{ij}$ of the above-mentioned client-item matrix R by means of Collaborative Filtering. The client-item matrix R, $R = (r_{ij}) \in R^{N \times M}$, comprises a plurality of individual elements $r_{ij}$, each individual element relating to a specific client i and a specific item j. By specific is meant one single client i or item j.

As shown in Fig. 1, the server S utilizes a second model component B and a global set of items $j_1,...,j_M$, the second

$$y_j = \begin{pmatrix} y_{j1} \\ y_{j2} \\ . \\ . \\ . \\ y_{jk} \end{pmatrix}$$

model component B being a factor matrix $B = Y(j, k)$ comprising a plurality of item factor vectors $y_j$, , being the number of factors.

The server S is, furthermore, connected to a plurality of clients $i_1,...,i_N$ utilizing a first model component A. Each individual client i comprises an individual part $A_i$ of the complete first model component A, and each individual client i utilizes at least one element of local client data $u_i$ see Fig. 1. The first model component A is a factor matrix $A = X(i, k)$

$$x_i = \begin{pmatrix} x_{i1} \\ x_{i2} \\ . \\ . \\ . \\ x_{ik} \end{pmatrix}$$

comprising a plurality of client factor vectors $x_i$, $x_i =$ , k being the number of factors. The individual part $A_i$ of the first model component A is the client factor vector $x_i$ for the client i.

The server is configured to execute the following steps, shown schematically in Fig. 1:

A. determine several of the clients $i_1,...,i_N$, which in one embodiment comprises determining all available clients i,
B. assign a second model component B to the server,
C. receive an aggregate of evaluations of individual values from the several determined clients $i_1,...,i_N$, in each determined client i an updated individual part Ai2 of the first model component A is calculated by means of the assigned second model component B which is downloaded by each determined client i and the element of local client data $u_i$, and the individual value for each item $j_1,...,j_M$ is calculated by means of a function f(i,j), the function using the assigned second model component B, the updated individual part Ai2 of the first model component A, and the element of local client data $u_i$, and the evaluation of the value is uploaded by each determined client i to the server,
D. calculate an updated second model component B2 by means of the assigned second model component B and the aggregate of evaluations uploaded from the several determined clients $i_1,... ,i_N$, and
E. transmit the updated second model component B2 to each determined client i such that, in each determined client i, a new updated individual part ($A_i$3) of the first model component (A) is calculated by means of the updated second model component (B2) and the element of local client data $u_i$, and at least one individual element $r_{ij}$ of the matrix (R) is updated, on the determined client i, by means of the new updated individual part $A_i$3 of the first model component A and the updated second model component B2.

At least one individual element $r_{ij}$ of the client-item matrix R is unspecified, and the above-mentioned updating of individual elements $r_{ij}$, on the determined client, comprises replacing such unspecified individual elements $r_{ij}$ with their estimates $(\hat{r}_{ij})$, $\hat{r}_{ij} = x_i^T y_j$.

The client-item matrix R is used for generating personalized application recommendations for the user of the client i, the recommendations, relating to at least one of the items $j_1,...,j_M$, are generated on the client i by means of the individual elements $\hat{r}_{ij}$, $r_{ij}$.

The aggregate of evaluations may be calculated by means of equation $\frac{\partial J}{\partial y_j} =$ -2 $\Sigma_i f(i,j) + 2\lambda y_j$, wherein $\lambda$ is a regularization parameter and J is a cost function.

The second model component B may be updated as mentioned in step D above.

The updating is executed by means of equation $y_j = y_j - \gamma \frac{\partial J}{\partial y_j}$, wherein $\gamma$ is a gain function.

The element of local client data $u_i$ may comprise explicit user feedback relating to one of the items $j_1,...,j_M$, in which case the function f(i,j) may be calculated by means of equation $f(i,j) = [p_{ij}(r_{ij} - x_i^T y_j)]x_i$, wherein p is a binary preference variable which indicates the preference of the user of a client i for an item $j_1,...,j_M$, by means of $p_{ij} \begin{cases} 1 & r_{ij} > 0 \\ 0 & r_{ij} = 0 \end{cases}$, a value $p_{ij}$=1 indicating an interest in item $j_1,...,j_M$, and a value $p_{ij}$=0 indicating one of a disinterest in item $j_1,...,j_M$ or unawareness of the item. The first model component A may, in this case, be updated by means of equation $x_i = (Yp(i)Y^T + \lambda I)^{-1}YR^ip(i)$, wherein p(i) is a binary preference variable vector for the client i, $R^i$ is a vector of known inputs for client i, I is an identity matrix, and $\lambda$ is a regularization parameter.

The element of local client data $u_i$ may also comprise implicit user feedback relating to one of the items $j_1,...,j_M$, in which case the function f(i,j) is calculated by means of equation $f(i,j) = [c_{ij}(p_{ij} - x_i^T y_j)]x_i$, wherein c is a confidence parameter and p is a binary preference variable which indicates the preference of a user of a client (i) for an item $(j_1,...,j_M)$, by means of $p_{ij} \begin{cases} 1 & r_{ij} > 0 \\ 0 & r_{ij} = 0 \end{cases}$, a value $p_{ij}$=1 indicating an interest in item $(j_1,...,j_M)$, and a value $p_{ij}$=0 indicating one of a disinterest in item $j_1,...,j_M$ or unawareness of the item. The first model component (A) may, in this case, be updated by means of equation $x_i = (YC^iY^T + \lambda I)^{-1}YC^ip(i)$, wherein p(i) is a binary preference variable vector for the client i, C' is a diagonal matrix, I is an identity matrix, and $\lambda$ is a regularization parameter.

Yet another aspect of the present disclosure relates to a client-server system adapted for updating individual elements $r_{ij}$ of the above-mentioned client-item matrix R by means of Collaborative Filtering. The system comprises the above-mentioned server and a plurality of the above-mentioned client.

Fig. 1 shows the flow of information in a client-server system adapted for updating a client-item matrix R schematically. Value f(i,j), for item j, is calculated on the client i using local user data $u_i$. The values f(i,j) for a plurality of items j are transmitted back to the server S, from a plurality of clients, and aggregated, whereafter model component B is updated. Hence, no local client data $u_i$ need be transferred out of the client i to update model component A. Each model component $A_i$ is also updated on the user device/client.

The system comprises one server S and a N number of clients i. For the sake of simplicity, Fig. 1 shows only two clients, $i_1$ and $i_N$, i.e. $i_N$ equals $i_2$. Client $i_1$ utilizes local client data $u_i$, i.e. $u_{i1}$, as well as an individual part $A_i$, i.e. $A_{i1}$, of a first model component A. Similarly, client $i_2$ utilizes local client data $u_i$, i.e. $u_{i2}$, as well as an individual part $A_i$, i.e. $A_{i2}$, of a first model component A. The server S utilizes a second model component B as well as a global set of items j. The client-item matrix R is updated to provide one or several estimates for unspecified elements of the client-item matrix R.

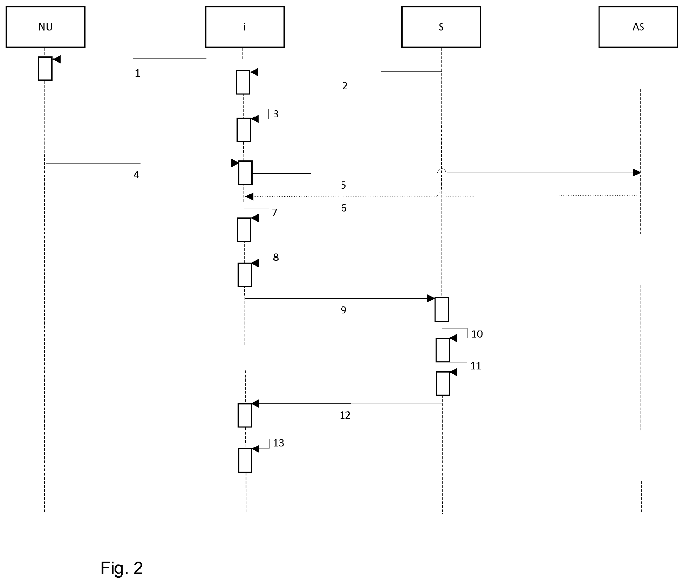

Fig. 2 shows one example of the steps taken when a new user NU is identified and attempts to download an item j, i.e. application, from an app service AS to a client i. The corresponding steps could be taken, e.g., when the user of the client downloads a video from a video service, or purchases a physical item from an online shop.

The steps shown in Fig. 2 comprise the following:

Step 1: The user NU browses the app store AS and the client $i_1$ shows top list recommendations, comprising one or several applications j, to the user NU.

Step 2: Model component B is transferred from the server S to the client $i_1$. This corresponds to step B, executed by the client, above.

Step 3: The client $i_1$ is assigned a random individual part $A_i$ of model component A. This corresponds to step A, executed by the client, above.

Step 4: The user NU submits a request for an application $j_1$ to be downloaded on the client $i_1$.

Step 5: The request is transmitted from the client $i_1$ to the app service AS.

Step 6: The application j is downloaded to the client $i_1$ from the app service AS.

Step 7: The individual part $A_i$ of model component A is updated on the client $i_1$, forming updated individual part $A_i2$. This corresponds to step C, executed by the client, above.

Step 8: An update of model component B is generated on the client $i_1$. This corresponds to step D, executed by the client, above.

Step 9: The update of model component B is transferred from the client $i_1$ to the server S. This corresponds to step E, executed by the client, above.

Step 10: The server S aggregates model component B updates from several clients $i_1,...,i_N$. This corresponds to a part of step D, executed by the server, above.

Step 11: The model component B is updated on the server S. This corresponds to a part of step D, executed by the server, above.

Step 12: An updated model component B2 is downloaded from the server S to all clients $i_1,...,i_N$. This corresponds to step F, executed by the client, above.

Step 13: The individual part $A_i2$ of model component A is updated on the client $i_1$, forming new, updated individual part $A_i3$. This corresponds to step G, executed by the client, above.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1.  A client (i) adapted for updating individual elements ($r_{ij}$) of a client-item matrix (R) by means of Collaborative Filtering, $R = X^TY$, $r_{ij} = x_iTy_j$, $T$ being a matrix/vector transpose,

    said matrix (R) comprising a plurality of individual elements ($r_{ij}$), each individual element relating to a specific client (i) and a specific item (j), wherein the individual elements ($r_{ij}$) are updated based on past decisions of the specific client (i) as well as other clients in a plurality of clients connected to a server,
    said client (i) utilizing an individual part ($A_i$) of a first model component (A) and at least one element of local client data ($u_i$),
    said first model component (A) being a factor matrix $A = X(i, k)$ comprising a plurality of client factor vectors ($x_i$),

$$x_i = \begin{pmatrix} x_{i1} \\ x_{i2} \\ \cdot \\ \cdot \\ \cdot \\ x_{ik} \end{pmatrix}$$
, k being the number of factors,

    said individual part ($A_i$) of said first model component (A) being the client factor vector ($x_i$) for said client (i),
    said client (i) being connected to the server utilizing a second model component (B) and a global set of items ($j_1,...,j_M$), M being a maximum number of items,

said second model component (B) being a factor matrix $B = Y(j, k)$ comprising a plurality of item factor vectors ($y_j$),

$$y_j = \begin{pmatrix} y_{j1} \\ y_{j2} \\ . \\ . \\ . \\ y_{jk} \end{pmatrix}$$

, k being the number of factors,

said client (i) being configured to:

A. assign said individual part ($A_i$) of said first model component (A) to said client (i),

B. download a second model component (B) from said server,

C. calculate an updated individual part ($A_i2$) of said first model component (A) by means of said downloaded second model component (B) and said element of local client data ($u_i$),

D. calculate an individual value for each item ($j_1,....,j_M$) by means of a function f(i,j), said function using said downloaded second model component (B), said updated individual part ($A_i2$) of said first model component (A), and said element of local client data ($u_i$),

E. upload an evaluation of said value to said server such that an updated second model component (B2) is calculated by said server by means of said second model component (B) and an aggregate of evaluations of said value uploaded from the plurality of clients ($i_1,..., i_N$) including said client and other determined clients, N being a maximum number of clients,

F. download said updated second model component (B2) from said server,

G. calculate a new updated individual part ($A_i3$) of said first model component (A) by means of said updated second model component (B2) and said element of local client data ($u_i$),

H. update at least one individual element ($r_{ij}$) of said matrix (R) by means of said new updated individual part ($A_i3$) of said first model component (A) and said updated second model component (B2).

2. The client according to claim 1, wherein at least one individual element ($r_{ij}$) of said client-item matrix (R) is unspecified, and wherein said updating of individual elements ($r_{ij}$) comprises replacing an unspecified individual element ($r_{ij}$) with an estimate $(\hat{r}_{ij})$, $\hat{r}_{ij} = x_i^T y_j$.

3. The client according to claim 2, wherein said client-item matrix (R) is used for generating personalized application recommendations for a user of said client (i), said recommendations, relating to at least one of said items ($j_1,...,j_M$), being generated on said client (i) by means of said individual elements $(\hat{r}_{ij}, r_{ij})$.

4. The client according to any one of the previous claims, wherein said aggregate of evaluations is calculated by means of equation $\dfrac{\partial J}{\partial y_j} =$ -2 $\Sigma_i f(i, j)$ + 2$\lambda y_j$, wherein $\lambda$ is a regularization parameter and J is a cost function.

5. The client according to claim 4, wherein said second model component (B) is updated by means of equation
$$y_j = y_j - \gamma \frac{\partial J}{\partial y_j}$$
, wherein $\gamma$ is a gain function.

6. The client according to any one of the previous claims, wherein said function f(i,j) is calculated by means of equation $f(i,j) = [p_{ij}(r_{ij} - x_i^T y_j)]x_i$ , wherein p is a binary preference variable which indicates the preference of a user of a client (i) for an item ($j_1,...,j_M$), by means of $p_{ij} \begin{cases} 1 & r_{ij} > 0 \\ 0 & r_{ij} = 0 \end{cases}$ , a value $p_{ij}=1$ indicating an interest in item ($j_1,...,j_M$), and a value $p_{ij}=0$ indicating one of a disinterest in item ($j_1,... ,j_M$) or unawareness of said item.

7. The client according to any one of the previous claims, wherein said first model component (A) is updated by means of equation $x_i = (Yp(i)Y^T + \lambda I)^{-1} YR^i p(i)$, wherein p(i) is a binary preference variable vector for said client (i), $R^i$ is a vector of known inputs for client (i), I is an identity matrix, and $\lambda$ is a regularization parameter.

8. The client according to any one claims 1 to 5, wherein said element of local client data ($u_i$) comprises implicit user feedback relating to one of said items ($j_1,...,j_M$).

9. The client according to claim 8, wherein said function f(i,j) is calculated by means of equation

$$f(i,j) = [c_{ij}(p_{ij} - x_i^T y_j)]x_i$$

, wherein c is a confidence parameter and p is a binary preference variable

$$p_{ij}\begin{cases}1 & r_{ij} > 0 \\ 0 & r_{ij} = 0\end{cases}$$

, a value $p_{ij}$=1 which indicates the preference of a user of a client (i) for an item ($j_1,...,j_M$), by means of indicating an interest in item ($j_1,...,j_M$), and a value $p_{ij}$=0 indicating one of a disinterest in item ($j_1,...,j_M$) or unawareness of said item.

10. The client according to claim 8 or 9, wherein said first model component (A) is updated by means of equation $x_i$ = $(YC^iY^T + \lambda I)^{-1}YC^ip(i)$, wherein p(i) is a binary preference variable vector for said client (i), $C^i$ is a diagonal matrix, and $\lambda$ is a regularization parameter.

11. A server adapted for updating individual elements ($r_{ij}$) of a client-item matrix R by means of Collaborative Filtering, $R = X^TY$, $r_{ij} = x_i^Ty_j$, T being a matrix/vector transpose,

said matrix (R) comprising a plurality of individual elements ($r_{ij}$), each individual element relating to a specific client (i) and a specific item (j), wherein the individual elements ($r_{ij}$) are updated based on past decisions of the specific client (i) as well as other clients in a plurality of clients connected to said server,
said server utilizing a second model component (B) and a global set of items ($j_1,...,j_M$), M being a maximum number of items,
said second model component (B) being a factor matrix $B = Y(j, k)$ comprising a plurality of item factor vectors ($y_j$),

$$y_j = \begin{pmatrix} y_{j1} \\ y_{j2} \\ . \\ . \\ . \\ y_{jk} \end{pmatrix}$$

, k being the number of factors,

said server being connected to a plurality of clients ($i_1,...,i_N$) utilizing a first model component (A), N being a maximum number of clients, each individual client (i) comprising an individual part ($A_i$) of said first model component (A), and each individual client (i) further utilizing at least one element of local client data ($u_i$), said first model component (A) being a factor matrix $A = X(i, k)$ comprising a plurality of client factor vectors ($x_i$),

$$x_i = \begin{pmatrix} x_{i1} \\ x_{i2} \\ . \\ . \\ . \\ x_{ik} \end{pmatrix}$$

, k being the number of factors,

said individual part ($A_i$) of said first model component (A) being the client factor vector ($x_i$) for said client (i), said server being configured to:

A. determine several of said clients ($i_1,..., i_N$),
B. assign a second model component (B) to said server,
C. receive an aggregate of evaluations of individual values from the several determined clients ($i_1,...,i_N$), wherein in each determined client (i) an updated individual part (Ai2) of said first model component (A) is calculated by means of said assigned second model component (B) which is downloaded by each determined client (i) and said element of local client data ($u_i$), and said individual value for each item ($j_1,...,j_M$) is calculated by means of a function f(i,j), said function using said assigned second model component (B), said updated individual part (Ai2) of said first model component (A), and said element of local client data ($u_i$), and said evaluation of said value is uploaded by each determined client (i) to said server,
D. calculate an updated second model component (B2) by means of said assigned second model component (B) and said aggregate of evaluations uploaded from the several determined clients ($i_1,... ,i_N$),

E. transmit said updated second model component (B2) to each determined client (i) such that, in each determined client (i), a new updated individual part ($A_i3$) of said first model component (A) is calculated by means of said updated second model component (B2) and said element of local client data ($u_i$), and at least one individual element ($r_{ij}$) of said matrix (R) is updated, on said determined client (i), by means of said new updated individual part ($A_i3$) of said first model component (A) and said updated second model component (B2).

12. The server according to claim 11, wherein at least one individual element ($r_{ij}$) of said client-item matrix (R) is unspecified, and wherein said updating of individual elements ($r_{ij}$), on said determined client (i), comprises replacing an unspecified individual element ($r_{ij}$) with an estimate $(\hat{r}_{ij})$, $\hat{r}_{ij} = x_i^T y_j$.

13. The server according to claim 11 or 12, wherein said client-item matrix (R) is used for generating personalized application recommendations for a user of said client (i), said recommendations, relating to at least one of said items ($j_1,...,j_M$), being generated on said client (i) by means of said individual elements($\hat{r}_{ij}$ $r_{ij}$).

14. The server according to any one of claims 11 to 13, wherein said aggregate of evaluations is calculated by means of

equation $\dfrac{\partial J}{\partial y_j} =$ $-2\Sigma_i f(i,j) + 2\lambda y_j$, wherein $\lambda$ is a regularization parameter and J is a cost function.

15. A client-server system adapted for updating individual elements ($r_{ij}$) of a client-item matrix R by means of Collaborative Filtering, said system comprising multiple clients according to any one of claims 1 to 10 and a server according to any one of claims 11 to 14.

**Patentansprüche**

1. Client (i), der zum Aktualisieren einzelner Elemente ($r_{ij}$) einer Client-Item-Matrix (R) mittels kollaborativer Filterung angepasst ist, $R = X^T Y$, $r_{ij} = x_i^T y_j$, wobei T eine Matrix/Vektor-Transponierte ist,

wobei die Matrix (R) eine Vielzahl von einzelnen Elementen ($r_{ij}$) umfasst, wobei sich jedes einzelne Element auf einen spezifischen Client (i) und ein spezifisches Item (j) bezieht, wobei die einzelnen Elemente ($r_{ij}$) auf Grundlage früherer Entscheidungen des spezifischen Clients (i) sowie anderer Clients in einer Vielzahl von Clients, die mit einem Server verbunden sind, aktualisiert werden;

wobei der Client (i) einen einzelnen Teil ($A_i$) einer ersten Modellkomponente (A) und mindestens ein Element lokaler Clientdaten ($u_i$) nutzt,

wobei die erste Modellkomponente (A) eine Faktormatrix $A = X(i, k)$ ist, die eine Vielzahl von Client-Faktorvekto-

$$x_i = \begin{pmatrix} x_{i1} \\ x_{i2} \\ \cdot \\ \cdot \\ \cdot \\ x_{ik} \end{pmatrix}$$

ren ($x_i$) umfasst,              , wobei k die Anzahl der Faktoren ist,

wobei der einzelne Teil ($A_i$) der ersten Modellkomponente (A) der Client-Faktorvektor ($x_i$) für den Client (i) ist,

wobei der Client (i) mit dem Server verbunden ist, der eine zweite Modellkomponente (B) und einen globalen Satz von Items ($j_1,..., j_M$) nutzt, wobei M eine maximale Anzahl von Items ist, wobei die zweite Modellkomponente (B) eine Faktormatrix $B = Y(j, k)$ ist, die eine Vielzahl von Item-Faktorvektoren ($y_j$) umfasst,

$$y_j = \begin{pmatrix} y_{j1} \\ y_{j2} \\ \cdot \\ \cdot \\ \cdot \\ y_{jk} \end{pmatrix}$$

, wobei k die Anzahl von Faktoren ist,

wobei der Client (i) zu Folgendem konfiguriert ist:

A. Zuweisen des einzelnen Teils ($A_i$) der ersten Modellkomponente (A) zu dem Client (i),

B. Herunterladen einer zweiten Modellkomponente (B) von dem Server,

C. Berechnen eines aktualisierten einzelnen Teils ($A_i2$) der ersten Modellkomponente (A) mittels der heruntergeladenen zweiten Modellkomponente (B) und des Elements lokaler Clientdaten ($u_i$),

D. Berechnen eines einzelnen Wertes für jedes Item ($j_1$,...,$j_M$) mittels einer Funktion f(i,j), wobei die Funktion die heruntergeladene zweite Modellkomponente (B), den aktualisierten einzelnen Teil ($A_i$2) der ersten Modellkomponente (A) und das Element lokaler Clientdaten ($u_i$) verwendet,

E. Hochladen einer Evaluierung des Wertes auf den Server, sodass eine aktualisierte zweite Modellkomponente (B2) durch den Server mithilfe der zweiten Modellkomponente (B) und einer Gesamtheit der Evaluierungen des Wertes berechnet wird, die von der Vielzahl von Clients ($i_1$,...,$i_N$) hochgeladen wurden, einschließlich des Clients und anderer bestimmter Clients, wobei N eine maximale Anzahl von Clients ist,

F. Herunterladen der aktualisierten zweiten Modellkomponente (B2) von dem Server,

G. Berechnen eines neuen aktualisierten einzelnen Teils ($A_i$3) der ersten Modellkomponente (A) mittels der aktualisierten zweiten Modellkomponente (B2) und des Elements lokaler Clientdaten ($u_i$),

H. Aktualisieren von mindestens einem einzelnen Element ($r_{ij}$) der Matrix (R) mithilfe des neuen aktualisier-ten einzelnen Teils ($A_i$3) der ersten Modellkomponente (A) und der aktualisierten zweiten Modellkomponente (B2).

2. Client nach Anspruch 1, wobei mindestens ein einzelnes Element ($r_{ij}$) der Client-Item-Matrix (R) nicht spezifiziert ist und wobei das Aktualisieren der einzelnen Elemente ($r_{ij}$) Ersetzen eines nicht spezifizierten einzelnen Elements ($r_{ij}$) durch eine Schätzung umfasst ($\hat{r}_{ij}$, $\hat{r}_{ij} = x_i^T y_j$

3. Client nach Anspruch 2, wobei die Client-Item-Matrix (R) zum Generieren personalisierter Anwendungsempfehlungen für einen Benutzer des Clients (i) verwendet wird, wobei die Empfehlungen, die sich auf mindestens eines der Items ($j_1$, ...,$j_M$) beziehen, auf dem Client (i) mittels der einzelnen Elemente generiert werden ($r_{ij}$,$r_{ij}$).

4. Client nach einem der vorhergehenden Ansprüche, wobei die Gesamtheit der Evaluierungen mittels Gleichung

$$\frac{\partial J}{\partial y_j} = -2 \sum_i f(i,j) + 2\lambda y_j$$, berechnet wird, wobei $\lambda$ ein Regularisierungsparameter ist und J eine Kostenfunktion ist.

5. Client nach Anspruch 4, wobei die zweite Modellkomponente (B) mittels Gleichung $$y_j = y_j - \gamma \frac{\partial J}{\partial y_j}$$ aktualisiert wird, wobei $\gamma$ eine Verstärkungsfunktion ist.

6. Client nach einem der vorhergehenden Ansprüche, wobei die Funktion *f(i,j)* mittels Gleichung

$$f(i,j) = [p_{ij}(r_{ij} - x_i^T y_j)]x_i$$, berechnet wird, wobei p eine binäre Präferenzvariable ist, welche die Präferenz eines Benutzers eines Clients (i) für ein Item ($j_1$,...,$j_M$) mittels $p_{ij} \begin{cases} 1 & r_{ij} > 0 \\ 0 & r_{ij} = 0 \end{cases}$, angibt, wobei ein Wert $p_{ij}$=1 ein Interesse an dem Item ($j_1$, ...,$j_M$) angibt und ein Wert $p_{ij}$=0 entweder ein Desinteresse an dem Item ($j_1$, ...,$j_M$) oder eine Unkenntnis des Items angibt.

7. Client nach einem der vorhergehenden Ansprüche, wobei die erste Modellkomponente (A) mittels der Gleichung $x_i = (Y_p(i)Y^T + \lambda I)^{-1}YR^i p(i)$ aktualisiert wird, wobei p(i) ein binärer Präferenzvariablenvektor für den Client (i) ist, $R^i$ ein Vektor bekannter Eingaben für den Client (i) ist, I eine Identitätsmatrix ist und $\lambda$ ein Regularisierungsparameter ist.

8. Client nach einem der Ansprüche 1 bis 5, wobei das Element lokaler Clientdaten ($u_i$) implizites Benutzerfeedback in Bezug auf eines der Items ($j_1$, ..., $j_M$) umfasst.

9. Client nach Anspruch 8, wobei die Funktion f(i,j) mittels Gleichung $$f(i,j) = [c_{ij}(p_{ij} - x_i^T y_j)]x_i$$ berechnet wird, wobei c ein Konfidenzparameter ist, wobei p eine binäre Präferenzvariable ist, welche die Präferenz eines Benutzers eines Clients (i) für ein Item ($j_1$,..., $j_M$) mittels $p_{ij} \begin{cases} 1 & r_{ij} > 0 \\ 0 & r_{ij} = 0 \end{cases}$ angibt, wobei ein Wert $p_{ij}$=1 ein Interesse an dem Item ($j_1$,...,$j_M$) angibt und ein Wert $p_{ij}$=0 entweder ein Desinteresse an dem Item ($j_1$, ..., $j_M$) oder eine Unkenntnis des Items angibt.

10. Client nach Anspruch 8 oder 9, wobei die erste Modellkomponente (A) mittels der Gleichung $x_i = (YC^iY^T + \lambda I)^{-1}YC^i p(i)$ aktualisiert wird, wobei p(i) ein binärer Präferenzvariablenvektor für den Client (i) ist, $C^i$ eine Diagonalmatrix ist und $\lambda$ ein Regularisierungsparameter ist.

**11.** Server (i), der zum Aktualisieren einzelner Elemente ($r_{ij}$) einer Client-Item-Matrix R mittels kollaborativer Filterung angepasst ist, $R = X^T Y$, $r_{ij} = x_i^T y_j$, wobei Teine Matrix/Vektor-Transponierte ist,

wobei die Matrix (R) eine Vielzahl von einzelnen Elementen ($r_{ij}$) umfasst, wobei sich jedes einzelne Element auf einen spezifischen Client (i) und ein spezifisches Item (j) bezieht, wobei die einzelnen Elemente ($r_{ij}$) auf Grundlage früherer Entscheidungen des spezifischen Clients (i) sowie anderer Clients in einer Vielzahl von Clients, die mit dem Server verbunden sind, aktualisiert werden;
wobei der Server eine zweite Modellkomponente (B) und einen globalen Satz von Items ($j_1,...,j_M$) nutzt, wobei M eine maximale Anzahl von Items ist,
wobei die zweite Modellkomponente (B) eine Faktormatrix B = $Y(j, k)$ ist, die eine Vielzahl von Item-Faktorvekto-

$$y_j = \begin{pmatrix} y_{j1} \\ y_{j2} \\ \cdot \\ \cdot \\ \cdot \\ y_{jk} \end{pmatrix},$$

ren ($y_j$), umfasst, wobei k die Anzahl von Faktoren ist,
wobei der Server mit einer Vielzahl von Clients ($i_1,..., i_N$) verbunden ist, die eine erste Modellkomponente (A) nutzt, wobei N eine maximale Anzahl von Clients ist, jeder einzelne Client (i) einen einzelnen Teil ($A_i$) der ersten Modellkomponente (A) umfasst und jeder einzelne Client (i) ferner mindestens ein Element lokaler Clientdaten ($u_i$) nutzt, wobei die erste Modellkomponente (A) eine Faktormatrix A = $X(i, k)$ ist, die eine Vielzahl von Client-

$$x_i = \begin{pmatrix} x_{i1} \\ x_{i2} \\ \cdot \\ \cdot \\ \cdot \\ x_{ik} \end{pmatrix},$$

Faktorvektoren ($x_i$) umfasst, wobei k die Anzahl von Faktoren ist,
wobei der einzelne Teil ($A_i$) der ersten Modellkomponente (A) der Client-Faktorvektor ($x_i$) für den Client (i) ist,
wobei der Server zu Folgendem konfiguriert ist:

A. Bestimmen mehrerer der Clients ($i_1,...,i_N$),
B. Zuweisen einer zweiten Modellkomponente (B) zu dem Server,
C. Empfangen einer Gesamtheit von Evaluierungen einzelner Werte von den mehreren bestimmten Clients ($i_1,..., i_N$), wobei in jedem bestimmten Client (i) ein aktualisierter einzelner Teil (Ai2) der ersten Modellkomponente (A) mithilfe der zugewiesenen zweiten Modellkomponente (B), die durch jeden bestimmten Client (i) heruntergeladen wird, und des Elements lokaler Clientdaten ($u_i$) berechnet wird, und der einzelne Wert für jedes Element ($j_1,...,j_M$) mithilfe einer Funktion f(i,j) berechnet wird, wobei die Funktion die zugewiesene zweite Modellkomponente (B), den aktualisierten einzelnen Teil (Ai2) der ersten Modellkomponente (A) und das Element lokaler Clientdaten ($u_i$) verwendet und die Evaluierung des Wertes durch jeden bestimmten Client (i) auf den Server hochgeladen wird,
D. Berechnen einer aktualisierten zweiten Modellkomponente (B2) mittels der zugewiesenen zweiten Modellkomponente (B) und der Gesamtheit der von den mehreren bestimmten Clients ($i_1, ..., i_N$) hochgeladenen Evaluierungen,
E. Übertragen der aktualisierten zweiten Modellkomponente (B2) an jeden bestimmten Client (i), sodass in jedem bestimmten Client (i) ein neuer aktualisierter einzelner Teil ($A_i3$) der ersten Modellkomponente (A) mithilfe der aktualisierten zweiten Modellkomponente (B2) und des Elements lokaler Clientdaten ($u_i$) berechnet wird und mindestens ein einzelnes Element ($r_{ij}$) der Matrix (R) auf dem bestimmten Client (i) mithilfe des neuen aktualisierten individuellen Teils ($A_i3$) der ersten Modellkomponente (A) und der aktualisierten zweiten Modellkomponente (B2) aktualisiert wird.

**12.** Server nach Anspruch 11, wobei mindestens ein einzelnes Element ($r_{ij}$) der Client-Item-Matrix (R) nicht spezifiziert ist und wobei das Aktualisieren der einzelnen Elemente ($r_{ij}$) auf dem bestimmten Client (i) Ersetzen eines nicht spezifizierten einzelnen Elements ($r_{ij}$) durch eine Schätzung umfasst

$$(\hat{r}_{ij}), \ \hat{r}_{ij} = x_i^T y_j.$$

**13.** Server nach Anspruch 11 oder 12, wobei die Client-Item-Matrix (R) zum Generieren personalisierter Anwendungsempfehlungen für einen Benutzer des Clients (i) verwendet wird, wobei die Empfehlungen, die sich auf mindestens eines der Items ($j_1,...,j_M$) beziehen, auf dem Client (i) mittels der einzelnen Elemente generiert werden ($\hat{r}_{ij}, r_{ij}$).

**14.** Server nach einem der Ansprüche 11 bis 13, wobei die Gesamtheit der Evaluierungen mittels Gleichung

$$\frac{\partial J}{\partial y_j} = -2\sum_i f(i,j) + 2\lambda y_j$$

, berechnet wird, wobei $\lambda$ ein Regularisierungsparameter ist und J eine Kostenfunktion ist.

**15.** Client-Server-System, das zum Aktualisieren einzelner Elemente ($r_{ij}$) einer Client-Element-Matrix R mittels kollaborativer Filterung angepasst ist, wobei das System mehrere Clients nach einem der Ansprüche 1 bis 10 und einen Server nach einem der Ansprüche 11 bis 14 umfasst.

**Revendications**

**1.** Client (i) conçu pour mettre à jour des éléments individuels ($r_{ij}$) d'une matrice client-article (R) au moyen d'un filtrage collaboratif, $R = X^T Y$, $r_{ij} = x_i^T y_j$, T étant une transposition matrice/vecteur,

    ladite matrice (R) comprenant une pluralité d'éléments individuels ($r_{ij}$), chaque élément individuel se rapportant à un client spécifique (i) et à un article spécifique (j), dans lequel les éléments individuels ($r_{ij}$) sont mis à jour sur la base de décisions passées du client spécifique (i) ainsi que d'autres clients dans une pluralité de clients connectés à un serveur ; ledit client (i) utilisant une partie individuelle ($A_i$) d'un premier composant de modèle (A) et au moins un élément de données de client local ($u_i$),
    ledit premier composant de modèle (A) étant une matrice de facteur $A = X(i, k)$ comprenant une pluralité de

$$x_i = \begin{pmatrix} x_{i1} \\ x_{i2} \\ \cdot \\ \cdot \\ \cdot \\ x_{ik} \end{pmatrix}$$

    vecteurs de facteur de client ($x_i$),     , k étant le nombre de facteurs,
    ladite partie individuelle ($A_i$) dudit premier composant de modèle (A) étant le vecteur de facteur de client ($x_i$) pour ledit client (i),
    ledit client (i) étant connecté au serveur en utilisant un second composant de modèle (B) et un ensemble global d'articles ($j_1,....j_M$), M étant un nombre maximal d'articles,
    ledit second composant de modèle (B) étant une matrice de facteur $B = Y(j, k)$ comprenant une pluralité de vecteurs de facteur d'article ($y_j$),

$$y_j = \begin{pmatrix} y_{j1} \\ y_{j2} \\ \cdot \\ \cdot \\ \cdot \\ y_{jk} \end{pmatrix}$$

    , k étant le nombre de facteurs,
    ledit client (i) étant configuré pour :

        A. attribuer ladite partie individuelle ($A_i$) dudit premier composant de modèle (A) audit client (i),
        B. télécharger un second composant de modèle (B) à partir dudit serveur,
        C. calculer une partie individuelle mise à jour ($A_i2$) dudit premier composant de modèle (A) au moyen dudit second composant de modèle téléchargé (B) et dudit élément de données de client local ($u_i$),
        D. calculer une valeur individuelle pour chaque article ($j_1,..., j_M$) au moyen d'une fonction f(i,j), ladite fonction utilisant ledit second composant de modèle téléchargé (B), ladite partie individuelle mise à jour ($A_i2$) dudit premier composant de modèle (A), et ledit élément de données de client local ($u_i$),
        E. télécharger une évaluation de ladite valeur sur ledit serveur de sorte qu'un second composant de modèle mis à jour (B2) est calculé par ledit serveur au moyen dudit second composant de modèle (B) et d'un agrégat d'évaluations de ladite valeur téléchargées à partir de la pluralité de clients ($i_1,..., i_N$) comportant ledit client et d'autres clients déterminés, N étant un nombre maximal de clients,
        F. télécharger ledit second composant de modèle mis à jour (B2) à partir dudit serveur,
        G. calculer une nouvelle partie individuelle mise à jour ($A_i3$) dudit premier composant de modèle (A) au moyen dudit second composant de modèle mis à jour (B2) et dudit élément de données de client local ($u_i$),
        H. mettre à jour au moins un élément individuel ($r_{ij}$) de ladite matrice (R) au moyen de ladite nouvelle partie individuelle mise à jour ($A_i3$) dudit premier composant de modèle (A) et dudit second composant de modèle mis à jour (B2).

**2.** Client selon la revendication 1, dans lequel au moins un élément individuel ($r_{ij}$) de ladite matrice client-article (R) est non spécifié, et dans lequel ladite mise à jour d'éléments individuels ($r_{ij}$) comprend le remplacement d'un élément individuel non spécifié ($r_{ij}$) par une estimation ($\hat{r}_{ij}$), $\hat{r}_{ij} = x_i^T y_j$,

3. Client selon la revendication 2, dans lequel ladite matrice client-article (R) est utilisée pour générer des recommandations d'application personnalisées pour un utilisateur dudit client (i), lesdites recommandations, se rapportant à au moins un desdits articles ($j_1,...,j_M$), étant générées sur ledit client (i) au moyen desdits éléments individuels ($\hat{r}_{ij}, r_{ij}$)

4. Client selon l'une quelconque des revendications précédentes, dans lequel ledit agrégat d'évaluations est calculé au moyen de l'équation $\frac{\partial J}{\partial y_j} = -2 \sum_i f(i,j) + 2\lambda y_j$, dans lequel $\lambda$ est un paramètre de régularisation et J est une fonction de coût.

5. Client selon la revendication 4, dans lequel ledit second composant de modèle (B) est mis à jour au moyen de l'équation $y_j = y_j - \gamma \frac{\partial J}{\partial y_j}$, dans laquelle $\gamma$ est une fonction de gain.

6. Client selon l'une quelconque des revendications précédentes, dans lequel ladite fonction $f(i,j)$ est calculée au moyen de l'équation $f(i,j) = [p_{ij}(r_{ij} - x_i^T y_j)]x_i$ dans laquelle p est une variable de préférence binaire qui indique la préférence d'un utilisateur d'un client (i) pour un article ($j_1,...,j_M$), au moyen de $p_{ij}\begin{cases} 1 & r_{ij} > 0 \\ 0 & r_{ij} = 0 \end{cases}$ une valeur $p_{ij} = 1$ indiquant un intérêt pour l'article ($j_1,...,j_M$), et une valeur $p_{ij} = 0$ indiquant l'un d'un désintérêt pour l'article ($j_1,...,j_M$) ou d'une méconnaissance dudit article.

7. Client selon l'une quelconque des revendications précédentes, dans lequel ledit premier composant de modèle (A) est mis à jour au moyen de l'équation $x_i = (Y_p(i)Y^T + \lambda I)^{-1}YR^i p(i)$, dans laquelle p(i) est un vecteur de variable de préférence binaire pour ledit client (i), $R^i$ est un vecteur d'entrées connues pour le client (i), I est une matrice d'identité et $\lambda$ est un paramètre de régularisation.

8. Client selon l'une quelconque des revendications 1 à 5, dans lequel ledit élément de données de client local ($u_i$) comprend une rétroaction d'utilisateur implicite se rapportant à l'un desdits articles ($j_1,..., j_M$).

9. Client selon la revendication 8, dans lequel ladite fonction f(i,j) est calculée au moyen de l'équation $f(i,j) = [c_{ij}(p_{ij} - x_i^T y_j)]x_i$, dans laquelle c est un paramètre de confiance et p est une variable de préférence binaire qui indique la préférence d'un utilisateur d'un client (i) pour un article ($j_i,...,j_M$), au moyen de $p_{ij}\begin{cases} 1 & r_{ij} > 0 \\ 0 & r_{ij} = 0 \end{cases}$, une valeur $p_{ij} = 1$ indiquant un intérêt pour l'article ($j_1,...,j_M$), et une valeur $p_{ij} = 0$ indiquant l'un d'un désintérêt pour l'article ($j_1,..., j_M$) ou d'une méconnaissance dudit article.

10. Client selon la revendication 8 ou 9, dans lequel ledit premier composant de modèle (A) est mis à jour au moyen de l'équation $x_i = (YC^i Y^T + \lambda I)^{-1}YC^i p(i)$, dans laquelle p(i) est un vecteur de variable de préférence binaire pour ledit client (i), $C^i$ est une matrice diagonale, et $\lambda$ est un paramètre de régularisation.

11. Serveur conçu pour mettre à jour des éléments individuels ($r_{ij}$) d'une matrice client-article R au moyen d'un filtrage collaboratif, $R = X^T Y$, $r_{ij} = x_i^T y_j$, T étant une transposition matrice/vecteur,

ladite matrice (R) comprenant une pluralité d'éléments individuels ($r_{ij}$), chaque élément individuel se rapportant à un client spécifique (i) et à un article spécifique (j), dans lequel les éléments individuels ($r_{ij}$) sont mis à jour sur la base de décisions passées du client spécifique (i) ainsi que d'autres clients dans une pluralité de clients connectés audit serveur ; ledit serveur utilisant un second composant de modèle (B) et un ensemble global d'articles ($j_1,...,j_M$), M étant un nombre maximal d'articles, ledit second composant de modèle (B) étant une matrice de facteur $B = Y(j, k)$ comprenant une pluralité de

$$y_j = \begin{pmatrix} y_{j1} \\ y_{j2} \\ . \\ . \\ . \\ y_{jk} \end{pmatrix}$$

vecteurs de facteur d'article ($y_j$), , k étant le nombre de facteurs,
ledit serveur étant connecté à une pluralité de clients ($i_1$, ..., $i_N$) utilisant un premier composant de modèle (A), N étant un nombre maximal de clients, chaque client individuel (i) comprenant une partie individuelle ($A_i$) dudit premier composant de modèle (A), et chaque client individuel (i) utilisant également au moins un élément de données de client local ($u_i$), ledit premier composant de modèle (A) étant une matrice de facteur $A = X(i, k)$

$$x_i = \begin{pmatrix} x_{i1} \\ x_{i2} \\ . \\ . \\ . \\ x_{ik} \end{pmatrix}$$

comprenant une pluralité de vecteurs de facteur de client ($x_i$), , k étant le nombre de facteurs,
ladite partie individuelle ($A_i$) dudit premier composant de modèle (A) étant le vecteur de facteur de client ($x_i$) pour ledit client (i),
ledit serveur étant configuré pour :

A. déterminer plusieurs desdits clients ($i_1$, ...,$i_N$),
B. attribuer un second composant de modèle (B) audit serveur,
C. recevoir un agrégat d'évaluations de valeurs individuelles provenant des plusieurs clients déterminés ($i_1$ ,..., $i_N$), dans lequel, dans chaque client déterminé (i), une - partie individuelle mise à jour (Ai2) dudit premier composant de modèle (A) est calculée au moyen dudit second composant de modèle attribué (B) qui est téléchargé par chaque client déterminé (i) et ledit élément de données de client local ($u_i$), et ladite valeur individuelle pour chaque article ($j_1$,..., $j_M$) est calculée au moyen d'une fonction f(i,j), ladite fonction utilisant ledit second composant de modèle attribué (B), ladite partie individuelle mise à jour (Ai2) dudit premier composant de modèle (A), et ledit élément de données de client local ($u_i$), et ladite évaluation de ladite valeur est téléchargée par chaque client déterminé (i) sur ledit serveur,
D. calculer un second composant de modèle mis à jour (B2) au moyen dudit second composant de modèle attribué (B) et dudit agrégat d'évaluations téléchargées à partir des plusieurs clients déterminés ($i_1$, ...,$i_N$),
E. transmettre ledit second composant de modèle mis à jour (B2) à chaque client déterminé (i) de sorte que, dans chaque client déterminé (i), une nouvelle partie individuelle mise à jour ($A_i$3) dudit premier composant de modèle (A) est calculée au moyen dudit second composant de modèle mis à jour (B2) et dudit élément de données de client local ($u_i$), et au moins un élément individuel ($r_{ij}$) de ladite matrice (R) est mis à jour, sur ledit client déterminé (i), au moyen de ladite nouvelle partie individuelle mise à jour ($A_i$3) dudit premier composant de modèle (A) et dudit second composant de modèle mis à jour (B2).

12. Serveur selon la revendication 11, dans lequel au moins un élément individuel ($r_{ij}$) de ladite matrice client-article (R) est non spécifié, et dans lequel ladite mise à jour d'éléments individuels ($r_{ij}$), sur ledit client déterminé (i), comprend le remplacement d'un élément individuel non spécifié ($r_{ij}$) par une estimation ($\hat{r}_{ij}$), $\hat{r}_{ij} = x_i^T y_j$.

13. Serveur selon la revendication 11 ou 12, dans lequel ladite matrice client-article (R) est utilisée pour générer des recommandations d'application personnalisées pour un utilisateur dudit client (i), lesdites recommandations, se rapportant à au moins un desdits articles ($j_1$, ..., $j_M$), étant générées sur ledit client (i) au moyen desdits éléments individuel s($\hat{r}_{ij}$,$r_{ij}$).

14. Serveur selon l'une quelconque des revendications 11 à 13, dans lequel ledit agrégat d'évaluations est calculé au moyen de l'équation $\frac{\partial J}{\partial y_j} = -2 \sum_i f(i,j) + 2\lambda y_j$, dans laquelle $\lambda$ est un paramètre de régularisation et J est une fonction de coût.

15. Système client-serveur conçu pour mettre à jour des éléments individuels ($r_{ij}$) d'une matrice client-article R au moyen d'un filtrage collaboratif, ledit système comprenant de multiples clients selon l'une quelconque des revendications 1 à 10 et un serveur selon l'une quelconque des revendications 11 à 14.

Fig. 1

Fig. 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009307296 A1